# EUROPÄISCHE PATENTSCHRIFT

(11) **EP 1 855 858 B1**
(45) Veröffentlichungstag und Bekanntmachung des Hinweises auf die Patenterteilung: **01.04.2009**
(21) Anmeldenummer: 06754734.9
(22) Anmeldetag: 12.01.2006
(51) Int. Cl.: B29B 7/76

(54) **MISCHKOPF FÜR HOCHVISKOSES AUSGANGSMATERIAL**
MIXING HEAD FOR HIGHLY VISCOUS STARTING MATERIAL
TETE DE MELANGE POUR MATERIAU DE DEPART TRES VISQUEUX

(30) Priorität: 22.02.2005 DE 102005007979
(43) Veröffentlichungstag der Anmeldung: 21.11.2007
(73) Patentinhaber: KraussMaffei Technologies GmbH, 80997 München (DE)
(72) Erfinder: SOECHTIG, Wolfgang, 82110 Germering (DE); RENKL, Josef, 85229 Markt Indersdorf (DE); BERCHTENBREITER, Ernst, 86438 Kissing (DE)
(74) Vertreter: Zollner, Richard
(86) Internationale Anmeldenummer: PCT/EP2006/050181
(87) Internationale Veröffentlichungsnummer: WO 2006/089816

(56) Entgegenhaltungen:
- EP-A- 0 879 685
- US-A- 4 600 312
- US-A- 5 201 580
- US-A1- 2001 017 816
- PATENT ABSTRACTS OF JAPAN Bd. 014, Nr. 314 (C-0737), 5. Juli 1990 (1990-07-05) & JP 02 107322 A (TOHO KIKAI KOGYO KK), 19. April 1990 (1990-04-19)
- PATENT ABSTRACTS OF JAPAN Bd. 013, Nr. 006 (M-781), 9. Januar 1989 (1989-01-09) & JP 63 218323 A (TOYODA GOSEI CO LTD), 12. September 1988 (1988-09-12)

## Beschreibung

Die folgende Erfindung betrifft einen Mischkopf zur Mischung von zumindest zwei reaktiven Ausgangsmaterialien, insbesondere für das Reaktionsgießverfahren, gemäß dem Oberbegriff des Anspruchs 1 sowie ein Verfahren zur Mischung der beiden reaktiven Ausgangsmaterialien gemäß dem Oberbegriff des Anspruchs 11.

Mischköpfe zum Mischen von zumindest zwei reaktiven Ausgangsmaterialien, insbesondere von Polyurethankomponenten, sind aus dem Stand der Technik hinreichend bekannt. Eine bevorzugte Ausführungsform von solchen Mischköpfen verwendet ein Hochdruck-Gegeninjektions-Verfahren, bei der in einer Mischkammer zwei Strahlen von Ausgangskomponenten unter großem Druck aufeinander zu gerichtet und beim Aufprall miteinander vermischt werden. Zur Realisierung der Hochdruck-Gegeninjektion, insbesondere zum Druckaufbau, müssen die beiden Ausgangsmaterialien durch eine Düse geleitet werden.

Ein Beispiel für ein Gegeninjektionsverfahren ist aus der US 5,201,580 bekannt. Bei dem darin beschriebenen Ausführungsformen von Mischköpfen sind die Zuleitungen zwar axial beabstandet, doch münden die Zufuhröffnungen auf gleicher axialer Höhe in die Mischkammer ein, so dass die beiden Eintragsstrahlen aufeinandertreffen.

Problematisch beim Hochdruck-Gegeninjektions-Verfahren ist nunmehr die Verarbeitung von hochviskosen Materialien. Insbesondere bei Materialien, die mit Füllstoffen, beispielsweise mit Fasern versetzt sind, kommt es dabei zu Problemen, da diese Füllstoffe die Düsen verstopfen und zusetzen können.

Hinsichtlich weiterer Mischköpfe zum Stand der Technik kann auf die JP 02107322 und die US 4600312 hingewiesen werden.

Ein weiterer Mischkopf für die Verarbeitung von Polyurethan-Material ist aus der EP 879 685 bekannt. Bei dem darin beschriebenen Mischkopf werden die Strahlen zweier Komponenten, die auch gleich sein können, im Gegeninjektionsverfahren aufeinander gerichtet. Darüber hinaus wird eine weitere Komponente über einen Kanal im Reinigungskolben - teilweise durch diesen hindurch - der Mischkammer zugeführt. Diese Ausführungsform ist jedoch nicht für die Zufuhr eines hochviskosen Ausgangsmaterials, insbesondere eines mit Fasern beladenen Ausgangsmaterials, durch den Kolben hindurch geeignet.

Bei der Herstellung von Kunststoffteilen nach dem Reaktionsgießverfahren werden jedoch häufig Verstärkungsfasern zur Verbesserung der mechanischen Eigenschaften der Produkte eingesetzt. Die Länge der verwendeten Fasern ist dabei von entscheidender Bedeutung für die Festigkeit des fertigen Produktes

Relativ problemlos lassen sich Faserlängen bis zu 0,5 mm, zum Teil auch bis zu 1,0 und 3,0 mm mit Mischköpfen verarbeiten, wie sie beispielsweise in der US 2001/0017816 beschrieben sind (dies ist abhängig von den verwendeten Fasermaterialien und der Konstruktion des Mischkopfs). Allerdings sind die Probleme meist dann nicht mehr in Griff zu bekommen, wenn Teile der in einem Ausgangsmaterial befindlichen Faser eine Länge von 3,0 mm überschreiten.

Die Verwendung von längeren Faserbestandteilen, beispielsweise Glas- oder Naturfasern, in Kunststoffprodukten wird zur Erhöhung der physikalischen Eigenschaften bzw. der Werkstoffeigenschaften zunehmend gewünscht. Je länger die Fasern verarbeitet werden können, umso bessere Werkstoffeigenschaften lassen sich erzielen. Durch Verarbeitung von Fasern bis zu einer maximalen Länge von 0,5 mm (oder möglicherweise bis zu 3,0 mm) können zukünftige Werkstoffanforderungen jedoch nicht mehr erfüllt werden.

Aus diesem Grund ist bereits seit einiger Zeit ein Trend zu Langfasern zu erkennen. Bekannt ist in diesem Zusammenhang ein Mischkopf, bei dem die Fasern außerhalb der Mischkammer den bereits vermischten Reaktionskomponenten zugesetzt werden. Dabei können beispielsweise die Fasern über ein Rohr durch den Mischkopf hindurch geführt werden, am Ende des Rohrs werden die Fasern dann in einen vermischten Reaktionsmaterialstrahl eingemischt. Bekannt ist es auch, Fasern schräg in einen Reaktionsstrahl einzumischen. Solchermaßen ausgebildete Mischköpfe, bei denen Glasfasern von Rovings zugeführt und vor der Zusetzung zu den Reaktionskomponenten geschnitten werden, erlauben eine Faserlänge bis zu 50 mm Länge. Jedoch ist mit diesem LFI-Verfahren (LFI = Long Fiber Injection) keine Befüllung einer geschlossenen Werkzeugform möglich. Vielmehr ist nur der Eintrag in offene Werkzeuge möglich, wobei der Mischkopf beispielsweise über einen Roboterarm auf einer definierten Bahn über die Werkzeugoberfläche geführt und in das Werkzeug eingetragen wird. Anschließend wird das Werkzeug geschlossen und das Produkt durch Aushärten der Reaktionskomponenten gebildet.

Da jedoch die Verwendung eines eigenen Roboterarms sowie das Schließen und Aushärten des Kunststoffproduktes relativ ineffizient ist, wird zunehmend der Wunsch laut, einen Mischkopf und ein Verfahren anzugeben, mit dem auch hochviskose Ausgangsmaterialien, insbesondere ein Ausgangsmaterial, welches mit Fasern beladen ist, das Faserlängen von über 0,5 mm, insbesondere über 1,0 mm, vorzugsweise über 3,0 mm zulässt, verarbeitet werden können, ohne dass es zu Funktionsstörungen kommt.

Bei einem Gemischeintrag in das geschlossene Schäumwerkzeug (bekannt aus dem sog. RRIM-Verfahren (RRIM = Reinforced Reaction Injection Molding)), müssen die Fasern einer der Reaktionskomponenten vor der Vermischung zugemischt sein. Bei der Verwendung von längeren Fasern führt dies jedoch zu einem enormen Anstieg der Materialviskosität. Ein solch hochviskoses Material ist mit den derzeitigen Verfahren nicht mehr zu verarbeiten.

Aufgabe der vorliegenden Erfindung ist, es einen Mischkopf und ein Verfahren anzugeben, mit dem auch hochviskose Ausgangsmaterialien, insbesondere in Reaktionsgießverfahren, zu verarbeiten sind.

Diese Aufgabe wird durch den im Anspruch 1 angegebenen Mischkopf sowie durch das in Anspruch 11 angegebene Verfahren gelöst.

Ein Kerngedanke der vorliegenden Erfindung ist es, das hochviskose Ausgangsmaterial mit relativ geringem Druck (also unter Vermeidung von Hochdruck) und entweder rezirkulieren zu lassen oder einer Mischkammer zuzuführen. Nach dem Zuführen des hochviskosen Ausgangsmaterials zu der Mischkammer sollte eine zweite Ausgangskomponente, insbesondere eine niedrigviskose Ausgangskomponente, in die Mischkammer eingespritzt werden, insbesondere unter hohem Druck. Vorzugsweise sollte es zwischen der Zuführung und der Rückführung des hochviskosen Ausgangsmaterials bzw. zwischen der Zuführung und der Mischkammer keine signifikanten Drosselstellen geben, an der sich Druck aufbauen kann oder an der eine Zusetzung aufgrund eines geringeren Strömungsquerschnittes möglich ist. Auf diese Art und Weise wird ein Zusetzen von Düsen (oder sonstigen Drosselstellen) wirkungsvoll verhindert und die Einbringung einer reaktiven Komponente, welche beispielsweise auch Faserbestandteile von mehr als 0,5 mm, insbesondere 1 mm, vorzugsweise 3,0 mm Länge beinhaltet, in eine geschlossene Form wird ohne weiteres ermöglicht.

Eine Drosselstelle wird beispielsweise dann verhindert, wenn der Zufuhrkanal, der Rückflusskanal und die Strömungsverbindung zwischen dem Zufuhr- und dem Rückflusskanal im Wesentlichen mit dem gleichen Strömungsquerschnitt ausgebildet sind.

Auch die Strömungsverbindung zwischen dem Zufuhrkanal und der Mischkammer soll im Endeffekt den gleichen Strömungsquerschnitt besitzen.

Eine besonders bevorzugte Ausführungsvariante ist dadurch gekennzeichnet, dass ein Reinigungskolben in der Mischkammer hin und her beweglich angeordnet ist, der Reinigungskolben in einer Position eine Strömungsverbindung zwischen dem Zufuhr- und dem Rückflusskanal ermöglicht und in einer anderen (bevorzugt zurückgezogenen Position) eine Strömungsverbindung zwischen dem Zufuhrkanal und der Mischkammer herstellt. Dabei kann das Ende des Reinigungskolbens vorzugsweise so ausgebildet sein, dass das hochviskose Ausgangsmaterial vom Zufuhrkanal in die Mischkammer durch die stirnseitige Ausbildung des Reinigungskolbens umgelenkt wird. Die Verbindung zwischen Zufuhr- und Rückflusskanal in der ersten genannten Position kann durch eine Bohrung oder eine Ringnut im Reinigungskolben realisiert sein.

Bezüglich der Einspritzöffnung ist auszuführen, dass auch mehrere Einspritzöffnungen in die Mischkammer vorgesehen sein können. Mehrere Einspritzöffnungen können beispielsweise ringförmig um die Mischkammer angeordnet sein. Um ein besonders druckvolles Einspritzen in die Mischkammer zu ermöglichen und damit eine möglichst gute Vermischung sicherzustellen, kann jeder Einspritzöffnung eine Einspritzdüse zugeordnet sein, mittels der das geringe viskose Ausgangsmaterial in die Mischkammer eingespritzt wird. Insbesondere sind die Einspritzdüsen separat, insbesondere hydraulisch, ansteuerbar ausgebildet.

Zum Verfahren ist zu sagen, dass es eine Einleitung von dem hochviskosen Ausgangsmaterial unter relativ geringem Druck und unter Vermeidung einer signifikanten Drosselstelle in die Mischkammer ermöglicht, so dass es zu keinen Verstopfungseffekten, auch bei der Beladung mit längeren Fasern, kommt. Dem hochviskosen Ausgangsmaterial wird sodann ein weiteres Ausgangsmaterial zugeführt, insbesondere hochdruckmäßig eingespritzt.

Insgesamt lässt sich mit der vorliegenden Erfindung auf einfache Art und Weise ein Mischkopf und ein Verfahren angeben, bei dem ein reaktives Material sich auch dann in ein geschlossenes Formwerkzeug einbringen lässt, wenn es hochviskose Ausgangsmaterialien verwendet wird, insbesondere ein Ausgangsmaterial, welches mit Fasern beladen ist, die zumindest zu Teil eine Länge von mehr als 0,5 mm, insbesondere mehr als 1,0 mm, vorzugsweise mehr als 3,0 mm, aufweisen. So können mit diesem Verfahren Faserlängen bis 25 mm und darüber verarbeitet werden.

Nachfolgend soll die vorliegende Erfindung anhand eines Ausführungsbeispiels und mit Bezug auf die beiliegenden Zeichnungen näher erläutert werden. Die Zeichnungen zeigen in:
**Fig. 1**: in stark schematischer Ausführungsform einen Schnitt durch einen erfindungsgemäßen Mischkopf mit vorgeschobenem Reinigungskolben,
**Fig. 2****:** einen Schnitt wie in Fig. 1, jedoch mit zurückgezogenem Reinigungskolben und
**Fig. 3****:** einen schematischen Schnitt durch den erfindungsgemäßem Mischkopf aus Fig. 1 in einer anderen Schnittebene, bei dem die Einspritzdüsen zu erkennen sind.

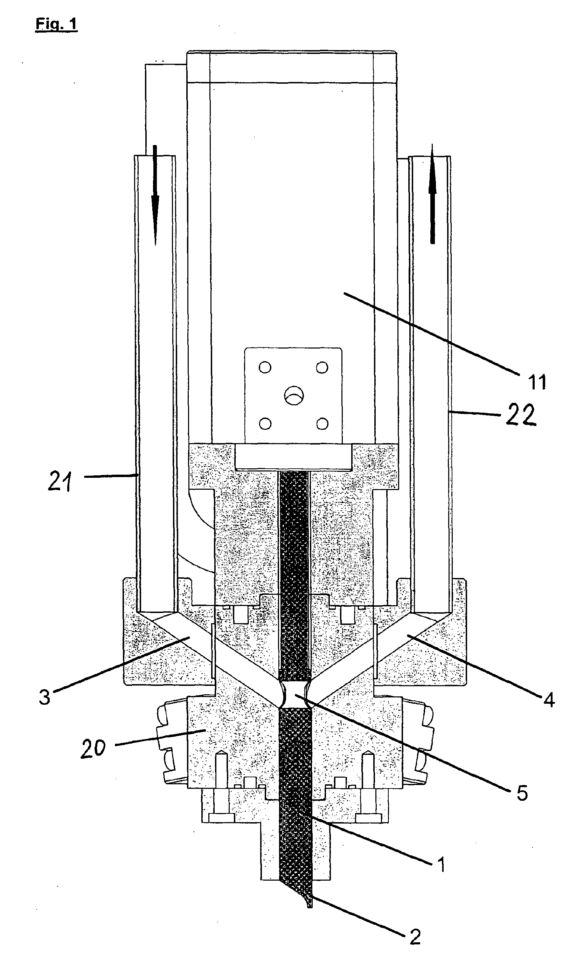

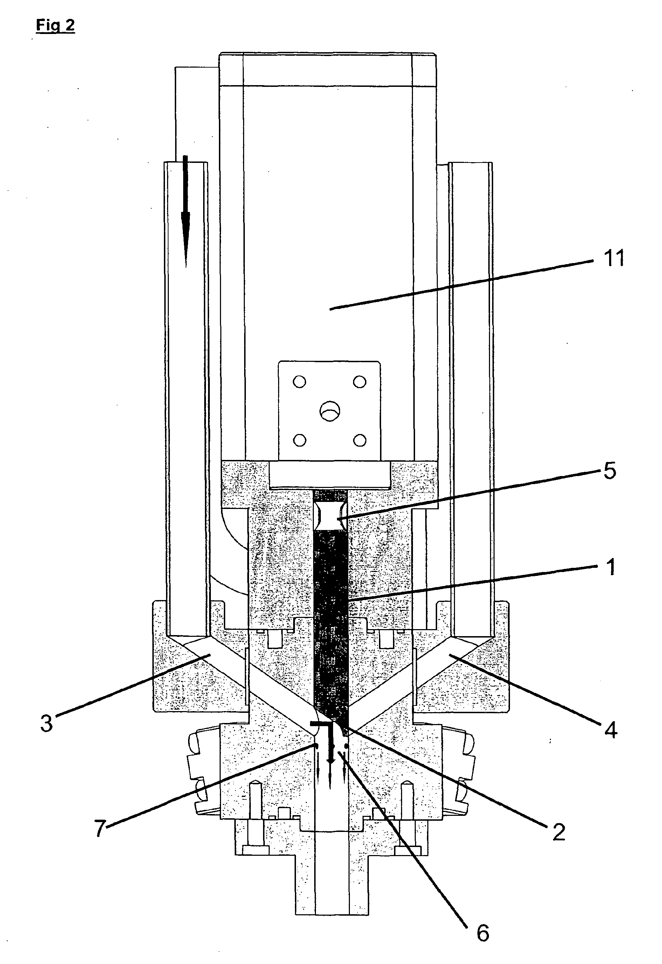

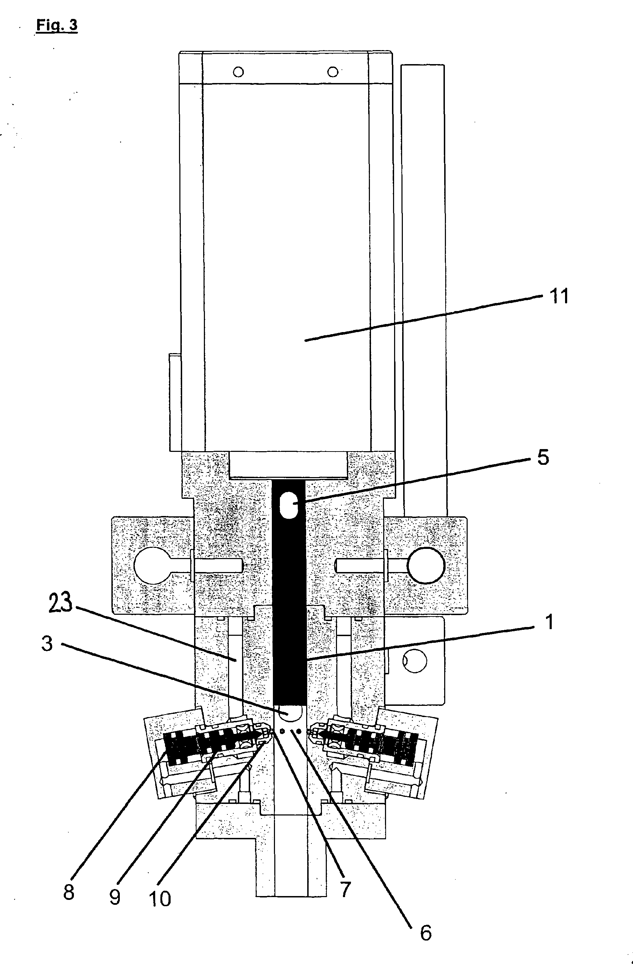

In den Figuren 1-3 ist in stark schematisierter Darstellungsweise ein erfindungsgemäßer Mischkopf in zwei verschiedenen Schnittebenen (Fig. 1 und 2 mit erster Schnittebene, Fig. 3 mit zweiter Schnittebene) dargestellt.

Der Mischkopf umfasst vorliegend ein mehrteiliges Gehäuse 20, in dem eine Mischkammer 6 in Form einer zylindrischen Kammer angeordnet ist. Die Mischkammer 6 weist am unteren Ende einen Auslauf auf, über den die reaktiven, miteinander vermischten, Komponenten aus dem Mischkopf aus und beispielsweise in ein geschlossenes Werkzeug eingebracht werden können. Die im Mischkopf zu vermischenden, reaktiven Komponenten werden mittels verschiedener Leitungen zugeführt, wie dies nachfolgend erläutert wird.

Ein hochviskoses Ausgangsmaterial, beispielsweise ein mit Fasern versetztes Polyol-Material wird über eine Zufuhrleitung 21 dem Mischkopf zugeführt. Die Zufuhrleitung 21 ist über einen im Mischkopf vorgesehenen Zufuhrkanal 3 mit der Mischkammer 6 verbindbar. In analoger Weise ist eine Rückflussleitung 22 mit dem Mischkopf verbunden, und die Rückflussleitung 22 ist über einen ebenfalls im Mischkopf vorgesehenen Rückflusskanal 4 mit de, Zufuhrkanal 3 strömungsmäßig verbindbar. Sowohl der Zufuhrkanal 3 wie auch der Rückflusskanal 4 enden axial gesehen in gleicher Höhe in der Mischkammer 6. In der Mischkammer 6 selbst ist ein bolzenförmiger Reinigungskolben aufgenommen, der bezüglich seines Durchmessers die Mischkammer 6 im wesentlichen ausfüllt, sich jedoch nach oben und unten hin- und herbewegen lässt.

In Fig. 1 ist der Reinigungskolben 1 in einer vorgefahren Position dargestellt. Der Antrieb des Reinigungskolbens wird über einen separaten Motor 11 realisiert.

Der Reinigungskolben 1 besitzt eine Bohrung 5, die so im Reinigungskolben 1 angeordnet ist, dass in der in Fig. 1 dargestellten vorverfahrenen Position über die Bohrung 5 eine Strömungsverbindung zwischen dem Zufuhrkanal 3 und dem Rückflusskanal 4 entsteht. Auf diese Art und Weise lässt sich eine Rezirkulation des hochviskosen Ausgangsmaterials aus einem Tagesbehälter über die Zufuhrleitung 21, den Zufuhrkanal 3, die Bohrung 5, den Rückflusskanal 4 sowie der Rückflussleitung 22 zurück in den Tagesbehälter realisieren.

Da- wie in Fig. 1. in etwa zu erkennen ist- die Strömungsquerschnitte des Zufuhrkanals 3, der Bohrung 5 sowie des Rückflusskanals 4 im wesentlichen gleich ausgebildet sind, baut sich nur ein relativ niedriger Druck auf und es kommt zu keinerlei Stauungseffekten, so dass eine Funktionsstörung aufgrund eines Verstopfens vermieden ist.

In Fig. 2 ist der Reinigungskolben 1 in zurückgefahrener Position dargestellt. Dabei ist die Bohrung nach oben verschoben, so dass die Strömungsverbindung zwischen dem Zufuhrkanal 3 und dem Rückflusskanal 4 unterbrochen wird. Darüber hinaus ist der Reinigungskolben in einem Maß zurückgezogen, dass nunmehr eine Strömungsverbindung zwischen dem Zufuhrkanal 3 und der Mischkammer 6 hergestellt ist. Durch die entsprechend nasenförmige Ausformung der Stirnseite des Reinigungskolbens wird nunmehr eine Umlenkung aus dem Zufuhrkanal 3 in die Mischkammer 6 hergestellt. Die Nase dient gleichzeitig der Absperrung gegenüber dem Rückflusskanal 4, so dass kein hochviskoses Ausgangsmaterial in dieser Position des Reinigungskolbens 1 nunmehr in den Rücklauf geraten kann. Da die Strömungsquerschnitte im Zufuhrkanal 3 und im Übergang zur Mischkammer 6 sowie in der Mischkammer 6 selbst relativ gleich groß dimensioniert sind, kommt es wiederum zu keiner funktionsbehindernden Störung beim Einbringen des hochviskosen Ausgangsmaterials in die Mischkammer mehr.

Um eine innige Vermischung der verschiedenen Ausgangsmaterialien zu erreichen, wird ein weniger viskoses Ausgangsmaterial über Einspritzöffnungen 7 (auch Injektionsbohrungen genannt), von denen in Fig. 2 drei zu erkennen sind, in die Mischkammer 6 eingebracht. Die Einspritzöffnungen 7 sind dabei stromabwärts der Zufuhr des hochviskosen Ausgangsmaterials in die Mischkammer 6 angeordnet. Insgesamt sind bei der vorliegenden Ausführungsform sechs kreisförmig um die Mischkammer 6 herum angeordnete Einspritzöffnungen vorgesehen.

In Fig. 3 ist zu erkennen, wie zu jeder Einspritzöffnung eine separate Einspritzdüse vorgesehen und im Gehäuse 20 aufgenommen ist. Jede Düse weist eine Düsennadel 9 und einen Düsenkegel 10 auf, wobei das die Düsennadel 9 den Düsenkegel 10 freigeben oder verschließen kann. Die Düsennadel 9 wird über einen Stellkolben 8, der hydraulisch beaufschlagbar ist, vor- oder zurückverschoben. Je nach Position des Stellkolbens 8 wird eine Verbindung zwischen einer nicht näher dargestellten Zufuhr für dieses Ausgangsmaterials über die Einspritzdüse und die Einspritzöffnung 7 zur Mischkammer 6 freigegeben oder verschlossen.

Das niederviskose Ausgangsmaterial, welches über die Einspritzöffnungen 7 in die Mischkammer 6 eingebracht wird, steht unter sehr hohem Druck, so dass es zusammen mit dem in sehr hochviskoser Form vorliegenden ersten Ausgangsmaterial zu einer innigen Durchmischung kommt.

Die Arbeitsweise der beschriebenen Vorrichtung ist aufgrund der vorher geschilderten Konstruktion an sich klar. Vor einem Einspritz- und Mischvorgang befindet sich der Reinigungskolben 1 in der vorgeschobenen Position der Fig. 1, wodurch es zu einer Rezirkulation beim hochviskosen Ausgangsmaterial über die Bohrung 5 kommt. Gleichzeitig sind die Einspritzdüsen 10 geschlossen, so dass keinerlei Ausgangsmaterial über die Einspritzöffnungen in die Mischkammer gelangen kann. Dies würde unter anderem auch der noch immer vorgeschobene Reinigungskolben 1 verhindern. Auch bei den Einspritzdüsen 10 bzw. für das niedrig viskose Ausgangsmaterial kann eine Rezirkulation vorgesehen sein.

Zum starten eines Einspritz- und Mischvorganges wird der Reinigungskolben 1 in die in Fig. 2 gezeigte Position zurückverfahren. Damit wird die Rezirkulation des hochviskosen Ausgangsmaterials vom Zufuhrkanal 3 über den Rückflusskanal 4 unterbunden. Sobald der Reinigungskolben 1 die Strömungsverbindung vom Zufuhrkanal 3 zur Mischkammer 6 freigibt, gelangt das hochviskose Ausgangsmaterial in die Mischkammer 6.

Gleichzeitig oder eventuell noch dem vor dem Zurückziehen des Reinigungskolbens 1 können die Einspritzdüsen 10 durch Zurückziehen der Düsennadel 9 geöffnet werden. So gelangt das niederviskose Ausgangsmaterial in die Mischkammer 6, in der sich nunmehr auch das hochviskose Ausgangsmaterial befindet. Je nach Steuerung der Einspritzdüsen wird dabei der Einspritzzeitpunkt so gewählt, dass die Einspritzung beginnt sobald erste Teile des hochviskosen Ausgangsmaterials in die Mischkammer 6 gelangen. Die Förderung des hochviskosen Ausgangsmaterials in die Mischkammer unter gleichzeitiger Einspritzung des niederviskosen Ausgangsmaterials erfolgt so lange, bis eine ausreichende Menge an reaktiven Komponenten über die Austragsöffnung in eine Schäumform - insbesondere eine geschlossene Schäumform - eingebracht ist.

Danach wird der Reinigungskolben 1 wieder in die in Fig. 1 gezeigte Position vor verfahren, wobei die Verbindung zwischen dem Zufuhrkanal 5 und der Mischkammer 6 unterbrochen, die Mischkammer gereinigt und die Rezirkulation des hochviskosen Ausgangsmaterials über die Bohrung 5 wieder hergestellt wird.

Natürlich können auch andere Ausführungsformen zur Realisierung der Erfindung vorgesehen werden. Dabei wird jedoch darauf zu achten sein, dass das hochviskose Ausgangsmaterial unter einem relativ geringem Druck und ohne übermäßige Querschnittsverengung die Mischkammer erreicht, so dass es auch bei der Verwendung von längerfasrigen Füllstoffen in einem hochviskosen Ausgangsmaterial nicht zu einer Funktionsstörung aufgrund eines Verstopfens kommt. Insbesondere macht sich dies bei Faserlängen von über 3,0 mm Länge bemerkbar.

## Patentansprüche

1. Mischkopf zur Mischung von zumindest zwei reaktiven Ausgangsmaterialien, insbesondere für ein Reaktionsgießverfahren, von denen zumindest ein Ausgangsmaterial in hochviskoser Form, insbesondere mit Füllstoffen beschickt, vorliegt, umfassend
- einen Zufuhrkanal (3) für ein Ausgangsmaterial,
- einen Rückflusskanal (4) für das Ausgangsmaterial,
- eine Mischkammer (6), die in einer Betriebsposition ein Ausgangsmaterial vom Zufuhrkanal (3) erhält und in der die Ausgangsmaterialien miteinander vermischt werden,
wobei eine Umschaltvorrichtung (1) vorgesehen ist, mit der wahlweise eine Strömungsverbindung (2) zwischen dem Zufuhrkanal (3) und der Mischkammer (6) einerseits oder zwischen dem Zufuhrkanal (3) und dem Rückflusskanal (4) andererseits herstellbar ist, und
- zumindest eine Einspritzöffnung (7) zum Einbringen eines weiteren Ausgangsmaterials mit geringerer Viskosität in die Mischkammer (6),
wobei die Zufuhr vom Zufuhrkanal (3) zur Mischkammer (6) stromaufwärts der zumindest einen Einspritzöffnung (7) vorgesehen ist,
**dadurch gekennzeichnet,**
**dass** der Zufuhrkanal (3) in einer Betriebsposition der Umschaltvorrichtung unmittelbar in die Mischkammer (6) mündet,
**dass** der Zufuhrkanal (3) zur Durchleitung eines hochviskosen Ausgangsmaterial geeignet ausgebildet ist, und
**dass** der Rückflusskanal (4) zur Durchleitung des hochviskosen Ausgangsmaterial geeignet ausgebildet ist.

2. Mischkopf nach Anspruch 1,
**dadurch gekennzeichnet,**
**dass** der Zufuhrkanal (3), der Rückflusskanal (4) und die Strömungsverbindung (5) zwischen dem Zufuhrkanal (3) und dem Rückflusskanal (4) im Wesentlichen ohne übermäßige Querschnittsverengung, insbesondere mit dem
gleichen Strömungsquerschnitt, ausgebildet sind.

3. Mischkopf nach Anspruch 1 oder 2,
**dadurch gekennzeichnet,**
**dass** die Strömungsverbindung zwischen dem Zufuhrkanal (3) und der Mischkammer (6) im Wesentlichen den gleichen Strömungsquerschnitt wie derjenige des Zufuhrkanals (3) besitzt.

4. Mischkopf nach einem der Ansprüche 1 bis 3,
**dadurch gekennzeichnet,**
- **dass** in der Mischkammer (6) ein Reinigungskolben (1) hin und her beweglich geführt ist,
- **dass** der Reinigungskolben (1) in einer Position eine Strömungsverbindung (5) zwischen dem Zufuhrkanal (3) und dem Rückflusskanal (4) und in einer zweiten Position eine Strömungsverbindung (2) zwischen dem Zufuhrkanal (3) und der Mischkammer (6) herstellt.

5. Mischkopf nach Anspruch 4,
**dadurch gekennzeichnet,**
**dass** das Ende des Reinigungskolbens (1) derart ausgebildet ist, dass das hochviskose Ausgangsmaterial vom Zufuhrkanal (3) in die Mischkammer (6) umgelenkt wird.

6. Mischkopf nach einem der vorhergehenden Ansprüche,
**dadurch gekennzeichnet,**
**dass** mehrere Einspritzöffnungen (7) vorgesehen sind.

7. Mischkopf nach Anspruch 6,
**dadurch gekennzeichnet,**
**dass** die Einspritzöffnungen (7) etwa ringförmig um die Mischkammer (6) angeordnet sind.

8. Mischkopf nach einem der Ansprüche 1 bis 7,
**dadurch gekennzeichnet,**
**dass** zu jeder Einspritzöffnung (7) eine Einspritzdüse (8, 9, 10) vorgesehen ist, mittels der das geringer viskose Ausgangsmaterial in die Mischkammer (6) eingespritzt wird.

9. Mischkopf nach Anspruch 8,
**dadurch gekennzeichnet,**
**dass** die Einspritzdüsen (8, 9, 10) separat ansteuerbar ausgebildet sind.

10. Mischkopf nach einem der vorhergehenden Ansprüche,
**dadurch gekennzeichnet,**
**dass** die Einspritzöffnung (7) und/oder die Einspritzdüse (8, 9, 10) derart ausgebildet sind, dass das niedriger viskose Ausgangsmaterial unter hohem Druck in die Mischkammer einspritzbar ist.

11. Verfahren, insbesondere Reaktionsgießverfahren zum Betrieb eines Mischkopfes bei dem zwei reaktive Ausgangsmaterialien gemischt werden, von denen ein hochviskoses Ausgangsmaterial mit Fasern versetzt ist, die zumindest teilweise eine Länge von über 0,5 mm, insbesondere über 1 mm, bevorzugt über 3 mm aufweisen, mit den - vorzugsweise zyklisch wiederholten
- Schritten, dass
- vor einem Mischvorgang ein Zufuhrkanal für das hochviskose, mit Fasern beladene Ausgangsmaterial mit einer Rückflussleitung zur Rezirkulation im Wesentlichen unter Aufrechterhaltung des Strömungsquerschnitts verbunden wird,
- zur Einleitung des Mischvorgangs der Zufuhrkanal mit der Mischkammer verbunden wird, wobei die Strömungsverbindung von der Zufuhrleitung zur Rückführleitung unterbrochen wird,
- beim Mischvorgang das hochviskose, mit Fasern beladene Material in die Mischkammer eingeleitet wird,
- ein weiteres, geringer viskoses Ausgangsmaterial über Einspritzdüsen stromabwärts der Zufuhr des hochviskosen Ausgangsmaterials in die Mischkammer eingespritzt wird und
das Reaktionsgemisch aus der Mischkammer ausgeführt wird.

12. Verfahren nach Anspruch 11,
**dadurch gekennzeichnet,**
**dass** das hochviskose Ausgangsmaterial mit Niederdruck in die Mischkammer eingeführt wird.

13. Verfahren nach Anspruch 11 oder 12,
**dadurch gekennzeichnet,**
**dass** das geringer viskose Ausgangsmaterial mit Hochdruck in die Mischkammer eingespritzt wird.

## Claims

1. A mixing head for mixing at least two reactive starting materials, in particular for a reaction casting method, of which at least one starting material is present in highly viscous form, in particular charged with fillers, comprising
- a feed passageway (3) for a starting material,
- a return passageway (4) for the starting material,
- a mixing chamber (6), which in an operating position receives a starting material from the feed passageway (3) and in which the starting materials are mixed with each other,
with a changeover device (1) being provided, by which optionally a flow connection (2) is able to be brought about between the feed passageway (3) and the mixing chamber (6) on the one hand or between the feed passageway (3) and the return passageway (4) on the other hand, and
- at least one injection port (7) for the introduction of a further starting material with lower viscosity into the mixing chamber (6),
with the feed from the feed passageway (3) to the mixing chamber (6) being provided upstream of the at least one injection port (7),
**characterized in that**
in an operating position of the changeover device, the feed passageway (3) opens directly into the mixing chamber (6),
the feed passageway (3) is suitably constructed for conducting through a highly viscous starting material, and
the return passageway (4) is suitably constructed for conducting through the highly viscous starting material.

2. The mixing head according to Claim 1,
**characterized in that**
the feed passageway (3), the return passageway (4) and the flow connection (5) between the feed passageway (3) and the return passageway (4) are constructed substantially without excessive cross-sectional constriction, in particular with the same flow cross-section.

3. The mixing head according to Claim 1 or 2,
**characterized in that**
the flow connection between the feed passageway (3) and the mixing chamber (6) has substantially the same flow cross-section as that of the feed passageway (3).

4. The mixing head according to any of Claims 1 to 3,
**characterized in that**
- in the mixing chamber (6) a cleaning piston (1) is guided so as to be movable to and fro,
- the cleaning piston (1) in one position brings about a flow connection (5) between the feed passageway (3) and the return passageway (4) and in a second position brings about a flow connection (2) between the feed passageway (3) and the mixing chamber (6).

5. The mixing head according to Claim 4,
**characterized in that**
the end of the cleaning piston (1) is constructed such that the highly viscous starting material is deflected from the feed passageway (3) into the mixing chamber (6).

6. The mixing head according to any of the preceding claims,
**characterized in that**
several injection ports (7) are provided.

7. The mixing head according to Claim 6,
**characterized in that**
the injection ports (7) are arranged approximately in a ring shape around the mixing chamber (6).

8. The mixing head according to any of Claims 1 to 7,
**characterized in that**
for each injection port (7) an injection nozzle (8, 9, 10) is provided, by means of which the less viscous starting material is injected into the mixing chamber (6).

9. The mixing head according to Claim 8,
**characterized in that**
the injection nozzles (8, 9, 10) are constructed so as to be able to be controlled separately.

10. The mixing head according to any of the preceding claims,
**characterized in that**
the injection port (7) and/or the injection nozzle (8, 9, 10) are constructed such that the lower viscous starting material is able to be injected into the mixing chamber under high pressure.

11. A method, in particular a reaction casting method, to operate a mixing head, in which two reactive starting materials are mixed, of which a highly viscous starting material is mixed with fibres which at least partly have a length of over 0.5 mm, in particular over 1 mm, preferably over 3 mm, with the - preferably cyclically repeated - steps, that
- before a mixing process, a feed passageway for the highly viscous starting material, charged with fibres, is connected with a return duct for recirculation substantially maintaining the flow cross-section,
- to initiate the mixing process, the feed passageway is connected with the mixing chamber, with the flow connection from the feed duct to the return duct being interrupted,
- during the mixing process, the highly viscous material, charged with fibres, is introduced into the mixing chamber,
- a further, less viscous starting material is injected into the mixing chamber via injection nozzles downstream of the feed of the highly viscous starting material and
the reaction mixture is guided out from the mixing chamber.

12. The method according to Claim 11,
**characterized in that**
the highly viscous starting material is introduced at low pressure into the mixing chamber.

13. The method according to Claim 11 or 12,
**characterized in that**
the less viscous starting material is injected at high pressure into the mixing chamber.

## Revendications

1. Tête de mélange, pour mélanger au moins deux matières de départ réactives, notamment pour un procédé de coulage par réaction, dont au moins une matière de départ se présente sous forme hautement visqueuse, notamment chargé d'agents de remplissage, comprenant
- un canal d'alimentation (3) pour une matière de départ,
- un canal de retour (4) pour la matière de départ,
- une chambre de mélange(6), qui dans une position de fonctionnement reçoit une matière de départ du canal d'alimentation (3) et dans laquelle les matières de départ sont mélangées entre elles,
un dispositif de commutation (1) étant prévu, à l'aide duquel au choix une liaison par écoulement (2) peut être établie entre le canal d'alimentation (3) et la chambre de mélange (6) d'une part, ou entre le canal d'alimentation (3) et le canal de retour (4) d'autre part, et
- au moins un orifice d'injection (7) pour l'introduction d'une matière de départ supplémentaire de plus faible viscosité dans la chambre de mélange (6),
l'alimentation du canal d'alimentation (3) vers la chambre de mélange (6) étant prévue en amont de l'au moins un orifice d'injection (7),
**caractérisée en ce que**,
dans une position de fonctionnement du dispositif de commutation, le canal d'alimentation (3) débouche directement dans la chambre de mélange (6),
**en ce que** le canal d'alimentation (3) est conçu pour laisser passer une matière de départ hautement visqueuse, et
**en ce que** le canal de retour (4) est conçu pour laisser passer la matière de départ hautement visqueuse.

2. Tête de mélange selon la revendication 1,
**caractérisée en ce que**,
le canal d'alimentation (3), le canal de retour (4) et la liaison par écoulement (5) entre le canal d'alimentation (3) et le canal de retour (4) sont conçus sensiblement sans rétrécissement excessif de la section transversale, notamment avec la même section transversale d'écoulement.

3. Tête de mélange selon la revendication 1 ou 2,
**caractérisée en ce que**,
la liaison par écoulement entre le canal d'alimentation (3) et la chambre de mélange (6) présente sensiblement la même section transversale d'écoulement que celle du canal d'alimentation (3).

4. Tête de mélange selon l'une quelconque des revendications 1 à 3,
**caractérisée en ce que**,
- un piston de nettoyage (1) est guidé en étant mobile de part et d'autre dans la chambre de mélange (6),
- **en ce que** dans une position, le piston de nettoyage (1) établit une liaison par écoulement (5) entre le canal d'alimentation (3) et le canal de retour (4) et dans une deuxième position, une liaison par écoulement (2) entre le canal d'alimentation (3) et la chambre de mélange (6).

5. Tête de mélange selon la revendication 4,
**caractérisée en ce que**
l'extrémité du piston de nettoyage (1) est conçue de sorte que la matière de départ hautement visqueuse soit déviée du canal d'alimentation (3) dans la chambre de mélange (6).

6. Tête de mélange selon l'une quelconque des revendications précédentes,
**caractérisée en ce que**
plusieurs orifices d'injection (7) sont prévus.

7. Tête de mélange selon la revendication 6,
**caractérisée en ce que**,
les orifices d'injection (7) sont disposés sous forme approximativement annulaire autour de la chambre de mélange (6).

8. Tête de mélange selon l'une quelconque des revendications 1 à 7,
**caractérisée en ce que**,
vers chaque orifice d'injection (7) est prévu un injecteur (8, 9, 10), au moyen duquel la matière de départ moins visqueuse est injectée dans la chambre de mélange (6).

9. Tête de mélange selon la revendication 8,
**caractérisée en ce que**,
les injecteurs (8, 9, 10) sont conçus pour être actionnables séparément.

10. Tête de mélange selon l'une quelconque des revendications précédentes,
**caractérisé en ce que**,
l'orifice d'injection (7) et/ou l'injecteur (8, 9, 10) sont conçus de sorte que la matière de départ moins visqueuse soit susceptible d'être injectée sous une haute pression dans la chambre de mélange.

11. Procédé, notamment procédé de coulage par réaction pour faire fonctionner une tête de mélange, consistant à mélanger deux matières de départ réactives, dont une matière de départ hautement visqueuse est mélangée à des fibres, qui présentent au moins en partie une longueur supérieure à 0,5 mm, notamment supérieure à 1 mm, de préférence supérieure à 3 mm avec les étapes (répétées de préférence de façon cyclique) selon lesquelles
- avant un processus de mélange, on relie un canal d'alimentation pour la matière de départ hautement visqueuse, chargée de fibres avec un conduit de retour, pour la recirculation, sensiblement sous maintien de la section transversale d'écoulement,
- pour l'initiation du processus de mélange, on relie le canal d'alimentation avec la chambre de mélange, la liaison par écoulement du conduit d'alimentation vers le conduit de retour étant interrompue,
- lors du processus de mélange, on introduit la matière hautement visqueuse, chargée de fibres dans la chambre de mélange,
- on injecte une matière de départ supplémentaire, moins visqueuse via des injecteurs dans la chambre de mélange, en aval de l'alimentation de la matière de départ hautement visqueuse, et
on évacue le mélange réactif hors de la chambre de mélange.

12. Procédé selon la revendication 11,
**caractérisé en ce que**,
on introduit la matière de départ hautement viscose sous basse pression dans la chambre de mélange.

13. Procédé selon la revendication 11 ou 12,
**caractérisé en ce que**,
on injecte la matière de départ moins visqueuse sous haute pression dans la chambre de mélange.
